# EUROPÄISCHE PATENTSCHRIFT

(11) **EP 2 274 580 B1**
(45) Veröffentlichungstag und Bekanntmachung des Hinweises auf die Patenterteilung: **26.10.2011**
(21) Anmeldenummer: 09737930.9
(22) Anmeldetag: 12.03.2009
(51) Int. Cl.: G01D 11/24

(54) **GEWINDESTUTZEN**
THREADED CONNECTION PIECE
TUBULURE FILETÉE

(30) Priorität: 30.04.2008 DE 102008001523
(43) Veröffentlichungstag der Anmeldung: 19.01.2011
(73) Patentinhaber: Robert Bosch GmbH, 70442 Stuttgart (DE)
(72) Erfinder: STOLL, Oliver, 72762 Reutlingen (DE); ROESSER, Christian, 71723 Grossbottwar (DE); LEDERMANN, Markus, 73084 Salach (DE); ENGELHARDT, Joerg, 71254 Ditzingen (Hirschlanden) (DE)
(86) Internationale Anmeldenummer: PCT/EP2009/052927
(87) Internationale Veröffentlichungsnummer: WO 2009/132886

(56) Entgegenhaltungen:
- EP-A- 1 770 377
- WO-A-2007/119323
- WO-A-2008/031691

## Beschreibung

### Stand der Technik

Die Erfindung betrifft einen Gewindestutzen mit den Merkmalen des Oberbegriffs des unabhängigen Anspruchs.

Aus der DE 10 2006 043 324 A1 ist ein Sensor zur kombinierten Druckmessung und Temperaturmessung bekannt, der einen in eine Aufnahmeöffnung eines Bauteils, beispielsweise eine Aufnahmeöffnung in einer Fluidleitung einer Klimaanlage, einschraub-baren Gewindestutzen aufweist. Hierzu weist der Gewindestutzen einen in die Aufnahmeöffnung zumindest teilweise einführbaren zylindrischen Grundkörper auf, der mit einem Gewindeabschnitt versehen ist. Beim Einschrauben des Gewindestutzens in die mit einem Innengewinde versehene Aufnahmeöffnung gelangt der Grundkörper mit einer in Form eines stirnseitigen Dichtkonus ausgebildeten Dichtfläche an einem in der Aufnahmeöffnung ausgebildeten Absatz unter Ausbildung eines Dichtsitzes zur Anlage, wodurch die Aufnahmeöffnung abdichtet wird. Der Gewindestutzen kann beispielsweise mittels eines Metall-Spritzgießverfahrens als MIM-Bauteil (Metal Injection Molding) oder auch als Drehteil oder in anderer Form gefertigt werden.

Derartige Gewindestutzen werden für kombinierte Druck- und Temperatursensoren beispielsweise in Klimaanlagen von Kraftfahrzeugen verbaut. Bei CO₂-Klimaanlagen bestehen sehr hohe Dichtheitsanforderungen. So darf die Leckage nicht größer als 1 g CO₂ pro Jahr sein. Der Gewindestutzen muss ohne Verlust der Dichtwirkung wiederholt in die Aufnahmeöffnung einschraubbar sein und wird mit einem relativ kleinen Einschraubmoment von etwa 10 Nm in ein relativ weiches Bauteil aus Aluminium eingeschraubt. Die im Betrieb der Klimaanlage auftretenden Medientemperaturen von -40 ° C bis 180 ° C bedingen große Unterschiede in der Längensausdehnung von Gewindestutzen und Aufnahmeöffnung, wodurch die Dichtwirkung verringert werden kann. Im ungünstigen Fall wird die Verbindung zwischen dem Gewindestutzen und der Aufnahmeöffnung undicht. Mit größer werdendem Abstand zwischen dem Gewindeabschnitt des Gewindestutzens und dem Dichtkonus des Gewindestutzens vergrößert sich die Gefahr der Undichtigkeit.

### Offenbarung der Erfindung

### Vorteile der Erfindung

Der erfindungsgemäße Gewindestutzen weist einen mit einem Gewindeabschnitt versehenen zylindrischen Grundkörper auf. Zwischen dem Gewindeabschnitt und einer stirnseitigen Dichtfläche ist der Grundkörper vorteilhaft elastisch ausgebildet, so dass sich der Grundkörper an dieser Stelle bereits bei kleinen Einschraubmomenten elastisch verformen und der Gegenkontur in der Aufnahmeöffnung anpassen kann. Vorteilhaft lässt sich mit dem erfindungsgemäßen Gewindestutzen die bei Temperaturschwankungen auftretenden Unterschiede in der Längenausdehnung von Gewindestutzen und Aufnahmeöffnung kompensieren. Außerdem ist durch die elastische Ausbildung des Gewindestutzens ein Ausgleich von geometrischen Toleranzen möglich, wodurch die Dichtwirkung erhöht wird. Durch die erfindungsgemäße elastische Ausbildung des Gewindestutzens lässt sich auch bei mehrfachen Ein- und Ausschrauben des Gewindestutzens eine zuverlässige Dichtwirkung erzielen, da die Dichtfläche durch die elastische Spannkraft des Gewindestutzens beim Einschrauben gegen den Gegensitz in der Aufnahmeöffnung beaufschlagt wird..

Vorteilhafte Ausbildungen und Weiterentwicklungen der Erfindung werden durch die in den abhängigen Ansprüchen angegebenen Maßnahmen ermöglicht.

Besonders einfach ist es, den zylindrischen Grundkörper zwischen dem Gewindeabschnitt und der Dichtfläche durch eine Verringerung seiner Wandstärke elastisch auszubilden. Zur Verringerung der Wandstärke kann wenigstens eine Materialaussparung im Außenmantel des Grundkörpers vorgesehen sein. Der zylindrische Grundkörper kann beispielsweise an seinem Außenmantel zwischen dem Gewindeabschnitt und der Dichtfläche mit Materialaussparungen in Form von über den Umfang verteilt angeordneten Ausnehmungen versehen sein, die durch Stege voneinander getrennt sind. Ein derartiger Gewindestutzen lässt sich beispielsweise als MIM-Bauteil herstellen.

Besonders vorteilhaft ist eine Ausführungsform, bei der der zylindrische Grundkörper an seinem Außenmantel zwischen dem Gewindeabschnitt und der Dichtfläche mit einer die wenigstens eine Materialaussparung bildenden umlaufenden Nut versehen ist. Die Nut kann sowohl bei einer Herstellung des Gewindestutzens als Spritzgussteil als auch bei einer Herstellung als Drehteil leicht in den Gewindestutzen eingebracht werden. Je näher die Nut der Dichtfläche ist, umso besser ist die elastische Wirkung und umso besser kann sich die Dichtfläche an das Gegenstück anpassen. Durch die spezielle Auswahl der Lage der Nut zwischen der Dichtfläche und dem Gewindeabschnitt und durch die Gestaltung der Nuttiefe kann die Elastizität des Grundkörpers gezielt an die Erfordernisse angepasst werden. Hierdurch kann die Elastizität auf einen Zwischenwert eingestellt werden als Kompromiss zwischen der benötigten Elastizität einerseits und der erforderlichen Abreißfestigkeit des Gewindestutzens bei hohen Drehmomenten andererseits.

### Kurze Beschreibung der Zeichnungen

Ausführungsbeispiele der Erfindung sind in den Zeichnungen dargestellt und werden in der nachfolgenden Beschreibung näher erläutert. Es zeigen
- Figur 1: eine perspektivische Ansicht eines Teils eines kombinierten Druck- und Temperatursensors mit dem erfindungsgemäßen Gewindestutzen,
- Figur 2: einen Längsschnitt durch Fig. 1,
- Figur 3: einen Prinzipbild zur Erläuterung der Flächenverhältnisse in Fig. 2

### Ausführungsformen der Erfindung

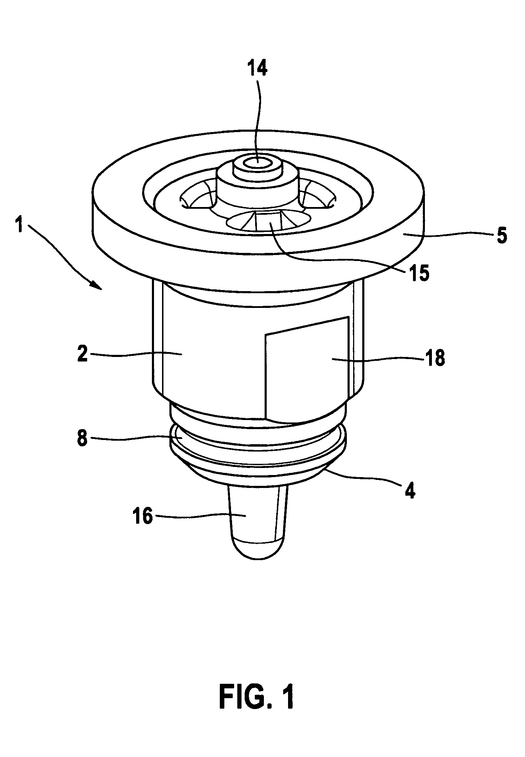

Figur 1 zeigt einen Teil eines kombinierten Druck- und Temperatursensors. Der dargestellte Teil umfasst ein Basisteil mit einem Flansch 5 und einem davon abstehenden Gewindestutzen 1. Auf das Basisteil kann ein nicht dargestelltes Deckelteil aufgesetzt werden. Der innere Aufbau eines derartigen Sensors ist beispielsweise in der DE 10 2006 043 324 A1 detailliert beschrieben worden. Wie in Fig. 1 zu erkennen ist, umfasst der Sensor beispielsweise eine Aufnahme für ein Drucksensorelement 14 und eine Temperaturfühlerbohrung 15, durch welche ein Temperaturfühler in den Gewindestutzen 1 so eingeschoben werden kann, dass ein Temperaturfühlerelement in einen endseitig von dem Gewindestutzen 1 abstehenden Finger 16 eingeführt wird.

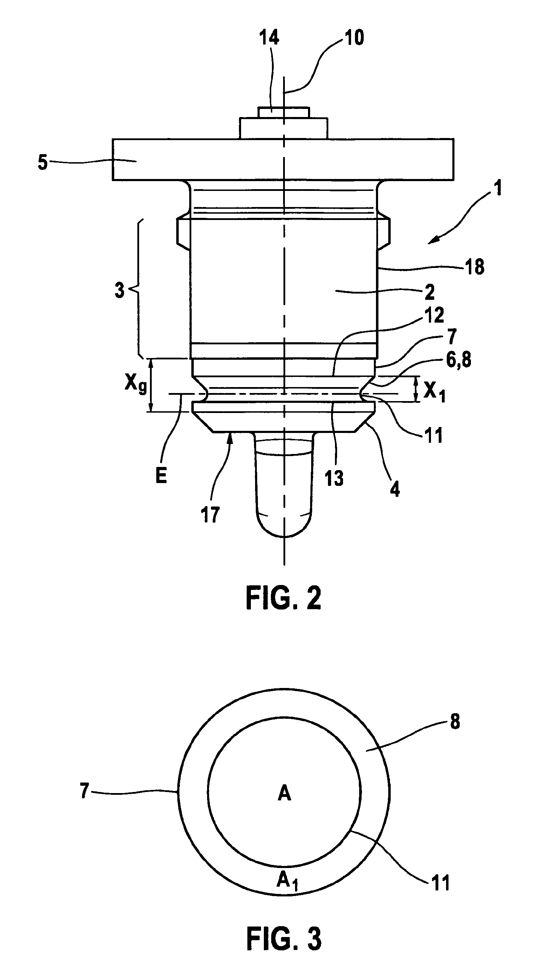

Wie in Fig. 1 und Fig. 2 dargestellt ist, weist der Gewindestutzen 1 einen von dem Flansch 5 abstehenden zylindrischen Grundkörper 2 mit einer Längsachse 10 auf, dessen Außenmantel 7 mit einem Gewindeabschnitt 3 und der an seiner Stirnseite 17 mit einer Dichtfläche 4 versehen ist. Vorzugweise ist die Dichtfläche 4 als Dichtkonus ausgebildet. Der zylindrische Außenmantel 7 des Grundkörpers 2 kann mit Abflachungen 18 versehen sein. Der Grundkörper 2 kann in einem Inneren mit einer nicht dargestellten Druckzuführungsöffnung versehen sein, welche sich von der Stirnseite 17 des Gewindestutzens 1 bis zur Aufnahme des Drucksensorelements 14 erstreckt. Ebenso verläuft die Temperaturfühlerbohrung 15 durch den Gewindestutzen. Der Gewindestutzen kann mit der Stirnseite 17 voran in eine mit einem Innengewinde versehene Aufnahmeöffnung einer Leitung eingeschraubt werden, so dass die Dichtfläche 4 an einer Gegenfläche in der Aufnahmebohrung unter Ausbildung eines Dichtsitzes zur Anlage gelangt.

Erfindungsgemäß ist der zylindrische Grundkörper 2 zwischen dem Gewindeabschnitt 3 und der Dichtfläche 4 elastisch ausgebildet. Dies kann beispielsweise durch eine Verringerung der Wandstärke des Grundkörpers 2 erreicht werden. Vorzugsweise ist hierzu wenigstens eine Materialaussparung 6 im Außenmantel 7 des Grundkörpers 2 vorgesehen ist. Es ist beispielsweise möglich, den Grundkörper 2 mit über den Umfang verteilt angeordneten Ausnehmungen zu versehen, die durch Stege voneinander getrennt sind. Ein solcher Gewindestutzen könnte beispielsweise als MIM-Bauteil hergestellt werden. In dem in Fig. 1 und Fig. 2 dargestellten bevorzugten Ausführungsbeispiels ist die Materialaussparung 6 in Form einer umlaufenden Nut 8 ausgebildet. Diese Nut ist zwischen der Dichtfläche 4 und dem Gewindeabschnitt 3 angeordnet.

Zur Ausbildung der erforderlichen Elastizität weist die umlaufende Nut 8 in einer senkrecht zur Längsachse 10 des Grundkörpers 2 durch den Nutgrund 11 verlaufenden Ebene E zwischen dem Nutgrund 11 und dem Außenmantel 7 des Grundkörpers 2 eine ringförmige Flächenausdehnung A1 auf, die mit der Querschnittsfläche A des Grundkörpers 2 in der Ebene E ein Verhältnis bildet, das größer als 0,05 und kleiner als 0,8 ist. Die Querschnittsfläche A des Grundkörpers 2 ist in diesem Zusammenhang als die durch den kreisförmigen Nutgrund 11 begrenzte Kreisfläche 11 anzusehen, unabhängig von Öffnungen und Kanäle in dem Grundkörper 2. Die Flächenausdehnung A1 der umlaufenden Nut 8 und die Querschnittfläche A sind in Fig. 3 dargestellt. Weiterhin ist es zur Ausbildung der erforderlichen Elastizität vorteilhaft, wenn zwei die umlaufende Nut 8 am Außenmantel 7 des Grundkörpers 2 begrenzende Nutränder 12, 13 einen die Nutbreite definierenden Abstand X1 aufweisen, der mit dem Abstand Xg des Dichtsitzes von dem Gewindeabschnitt 3 ein Verhältnis bildet, das größer ist als 0,05.

Je näher die umlaufende Nut 8 an der Dichtfläche 4 platziert wird, desto besser ist die elastische Wirkung und desto besser kann sich die als Dichtkonus ausgebildete Fläche 4 an das Gegenstück anpassen.

Der erfindungsgemäße Gewindestutzen ist nicht auf die Verwendung bei dem dargestellten Druck- und Temperatursensor beschränkt und kann grundsätzlich für alle Bauteile eingesetzt werden, die mittels eines Gewindestutzens in einer Aufnahmeöffnung unter Ausbildung einer Dichtwirkung festzulegen sind.

## Patentansprüche

1. Gewindestutzen zum Einschrauben in eine Aufnahmeöffnung, insbesondere Gewindestutzen eines Sensors, mit einem in die Aufnahmeöffnung zumindest teilweise einführbaren zylindrischen Grundkörper (2), der zumindest über einen Teil seiner Längserstreckung mit einem Gewindeabschnitt (3) und stirnseitig mit einer Dichtfläche (4) versehen ist, **dadurch gekennzeichnet, dass** der zylindrische Grundkörper (2) zwischen dem Gewindeabschnitt (3) und der Dichtfläche (4) elastisch ausgebildet ist.

2. Gewindestutzen nach Anspruch 1, **dadurch gekennzeichnet, dass** der zylindrische Grundkörper (2) zwischen dem Gewindeabschnitt (3) und der Dichtfläche (4) durch eine Verringerung seiner Wandstärke elastisch ausgebildet ist.

3. Gewindestutzen nach Anspruch 2, **dadurch gekennzeichnet, dass** zur Verringerung der Wandstärke wenigstens eine Materialaussparung (6) im Außenmantel (7) des Grundkörpers (2) vorgesehen ist.

4. Gewindestutzen nach Anspruch 3, **dadurch gekennzeichnet, dass** der zylindrische Grundkörper (2) an seinem Außenmantel (7) zwischen dem Gewindeabschnitt (3) und der Dichtfläche (4) mit Materialaussparungen in Form von über den Umfang verteilt angeordneten Ausnehmungen versehen ist.

5. Gewindestutzen nach Anspruch 3, **dadurch gekennzeichnet, dass** der zylindrische Grundkörper (2) an seinem Außenmantel (7) zwischen dem Gewindeabschnitt (3) und der Dichtfläche (4) mit einer die wenigstens eine Materialaussparung (6) bildenden umlaufenden Nut (8) versehen ist.

6. Gewindestutzen nach Anspruch 5, **dadurch gekennzeichnet, dass** die umlaufende Nut (8) in einer senkrecht zur Längsachse (10) des Grundkörpers (2) durch den Nutgrund (11) der Nut (8) verlaufenden Ebene (E) zwischen dem Nutgrund (11) und dem Außenmantel (7) des Grundkörpers eine ringförmige Flächenausdehnung (A1) aufweist, wobei das Verhältnis der ringförmigen Flächenausdehnung (A1) zur Querschnittsfläche (A) des Grundkörpers (2) in dieser Ebene (E) größer als 0,05 und kleiner als 0,8 ist.

7. Gewindestutzen nach Anspruch 5 oder 6, **dadurch gekennzeichnet, dass** zwei die umlaufende Nut (8) am Außenmantel (7) des Grundkörpers begrenzende Nutränder (12, 13) einen Abstand (X1) aufweisen, der mit dem Abstand (Xg) des Dichtsitzes von dem Gewindeabschnitt (3) ein Verhältnis bildet, das größer ist als 0,05.

8. Gewindestutzen nach einem der Ansprüche 1 bis 7, **dadurch gekennzeichnet, dass** die Dichtfläche (4) durch einen Dichtkonus gebildet wird.

9. Sensor, insbesondere Drucksensor und/oder Temperatursensor, **dadurch gekennzeichnet, dass** der Sensor einen Gewindestutzen nach einem der Ansprüche 1 bis 8 aufweist.

## Claims

1. Threaded connection piece for screwing into a receiving opening, in particular a threaded connection piece of a sensor, comprising a cylindrical basic body (2) which can be at least partially inserted into the receiving opening and which is provided, at least over part of its longitudinal extent, with a threaded portion (3) and, at its end, with a sealing surface (4), **characterized in that** the cylindrical basis body (2) is designed to be elastic between the threaded portion (3) and the sealing surface (4).

2. Threaded connection piece according to Claim 1, **characterized in that** the cylindrical basic body (2) is designed to be elastic between the threaded portion (3) and the sealing surface (4) through a reduction in its wall thickness.

3. Threaded connection piece according to Claim 2, **characterized in that**, in order to reduce the wall thickness, at least one material cutout (6) is provided in the outer casing (7) of the basic body (2).

4. Threaded connection piece according to Claim 3, **characterized in that** the cylindrical basic body (2) is provided on its outer casing (7), between the threaded portion (3) and the sealing surface (4), with material cutouts in the form of recesses distributed over the circumference.

5. Threaded connection piece according to Claim 3, **characterized in that** the cylindrical basic body (2) is provided on its outer casing (7), between the threaded portion (3) and the sealing surface (4), with a peripheral groove (8) forming the at least one material cutout (6).

6. Threaded connection piece according to Claim 5, **characterized in that**, in a plane (E) extending perpendicularly to the longitudinal axis (10) of the basic body (2) through the base (11) of the groove (8), the peripheral groove (8) has an annular areal extent (A1) between the groove base (11) and the outer casing (7) of the basic body, wherein the ratio of the annular areal extent (A1) to the cross-sectional area (A) of the basic body (2) in this plane (E) is greater than 0.05 and less than 0.8.

7. Threaded connection piece according to Claim 5 or 6, **characterized in that** two groove edges (12, 13), which delimit the peripheral groove (8) on the outer casing (7) of the basic body, have a spacing (X1) which, together with the spacing (Xg) of the sealing seat from the threaded portion (3), forms a ratio which is greater than 0.05.

8. Threaded connection piece according to one of Claims 1 to 7, **characterized in that** the sealing surface (4) is formed by a sealing cone.

9. Sensor, in particular pressure sensor and/or temperature sensor, **characterized in that** the sensor has a threaded connection piece according to one of Claims 1 to 8.

## Revendications

1. Tubulure filetée à visser dans une ouverture de réception, en particulier tubulure filetée d'un capteur, comprenant un corps de base cylindrique (2) pouvant être introduit au moins en partie dans l'ouverture de réception, lequel est pourvu sur au moins une partie de son étendue longitudinale d'une portion filetée (3) et du côté frontal d'une surface d'étanchéité (4), **caractérisée en ce que** le corps de base cylindrique (2) est réalisé de manière élastique entre la portion filetée (3) et la surface d'étanchéité (4).

2. Tubulure filetée selon la revendication 1, **caractérisée en ce que** le corps de base cylindrique (2) est réalisé de manière élastique entre la portion filetée (3) et la surface d'étanchéité (4) par une réduction de son épaisseur de paroi.

3. Tubulure filetée selon la revendication 2, **caractérisée en ce que** pour réduire l'épaisseur de paroi on prévoit au moins un enlèvement de matière (6) dans l'enveloppe extérieure (7) du corps de base (2).

4. Tubulure filetée selon la revendication 3, **caractérisée en ce que** le corps de base cylindrique (2) est pourvu sur son enveloppe extérieure (7) entre la portion filetée (3) et la surface d'étanchéité (4) d'enlèvements de matière en forme d'évidements répartis sur la périphérie.

5. Tubulure filetée selon la revendication 3, **caractérisée en ce que** le corps de base cylindrique (2) est pourvu sur son enveloppe extérieure (7) entre la portion filetée (3) et la surface d'étanchéité (4) d'une rainure périphérique (8) formant l'au moins un enlèvement de matière (6).

6. Tubulure filetée selon la revendication 5, **caractérisée en ce que** la rainure périphérique (8) présente, dans un plan (E) s'étendant à travers la base de rainure (11) de la rainure (8), perpendiculairement à l'axe longitudinal (10) du corps de base (2), entre le fond de rainure (11) et l'enveloppe extérieure (7) du corps de base, un étirement de surface annulaire (A1), le rapport entre l'étirement de surface annulaire (A1) et la surface en section transversale (A) du corps de base (2) étant dans ce plan (E) supérieur à 0,05 et inférieur à 0,8.

7. Tubulure filetée selon la revendication 5 ou 6, **caractérisée en ce que** deux bords de rainure (12, 13) limitant la rainure périphérique (8) sur l'enveloppe extérieure (7) du corps de base présentent un espacement (X1) qui forme avec l'espacement (Xg) du siège d'étanchéité de la portion filetée (3) un rapport qui est supérieur à 0,05.

8. Tubulure filetée selon l'une quelconque des revendications 1 à 7, **caractérisée en ce que** la surface d'étanchéité (4) est formée par un cône d'étanchéité.

9. Capteur, en particulier capteur de pression et/ou capteur de température, **caractérisé en ce que** le capteur présente une tubulure filetée selon l'une quelconque des revendications 1 à 8.
